# EUROPEAN PATENT SPECIFICATION

(11) **EP 2 512 190 B1**
(45) Date of publication and mention of the grant of the patent: **06.01.2016**
(21) Application number: 10791569.6
(22) Date of filing: 24.06.2010
(51) Int. Cl.: H04W 52/02

(54) **MOBILE TERMINAL AND SLEEP METHOD IN MBBMS MODULE OF MOBILE TERMINAL**
MOBILES ENDGERÄT UND ENERGIESPARVERFAHREN IM MBBMS-MODUL DES MOBILEN ENDGERÄTS
TERMINAL MOBILE ET PROCÉDÉ DE REPOS DANS UN MODULE MBBMS DE TERMINAL MOBILE

(30) Priority: 11.12.2009 CN 200910254331
(43) Date of publication of application: 17.10.2012
(73) Proprietor: ZTE Corporation, Shenzhen, Guangdong 518057 (CN)
(72) Inventor: DONG, Jinguang, Shenzhen Guangdong 518057 (CN)
(74) Representative: Krauns, Christian
(86) International application number: PCT/CN2010/074410
(87) International publication number: WO 2010/149063

(56) References cited:
- EP-A1- 1 643 358
- EP-A2- 0 593 272
- CN-A- 1 645 955
- CN-A- 101 248 404
- CN-A- 101 467 432
- US-A- 4 093 921
- US-A1- 2002 152 459

## Description

### Technical Field

The present invention relates to the field of mobile communication, and more particularly, to a mobile terminal and a method for dormancy of an MBBMS module in the mobile terminal.

### Background of the Related Art

A Mobile Broadcast Business Management System (MBBMS) is a handheld mobile device carrying a mobile phone TV function of the MBBMS such that mobile phone TV is watched just as broadcast is listened, and is very convenient to use.

The MBBMS implements operability and manageability of broadcast mobile phone TV services. The basis of the MBBMS is to manage mobile phone TV users using management and charging systems and certification and authentication mechanisms of the existing mobile communication networks. The MBBMS can carry not only telecommunication standards, such as Terrestrial Mobile Multimedia Broadcasting (TMMB), time division synchronous code division multiple access (TD-SCDMA), multimedia broadcast system (TD-MBMS), but also China mobile multimedia broadcasting (CMMB).

Since the MBBMS technology is an emerging technology, maturity of chips related to the MBBMS in the market remains to be improved. If a chip stops working, the related internally running firmware and current working state information will be lost. When a mobile terminal enters into a standby mode and is then awakened, this defect will result in loss of the related information of users, such as the currently played program list and firmware, bringing great inconvenience to the users.

For this defect, a most common method is that when a mobile phone enters a dormancy state, a Power Manage Unit (PMU) always maintains power on of a MBBMS module such that it is in a working state. That is to say, the MBBMS does not enter the standby dormancy state. The drawback of such a method is quite apparent, i.e. standby using time of a battery is reduced. Because the MBBMS module is still maintained in the working state when a user selects to cause the terminal to enter into dormancy, electricity of the battery is consumed meaninglessly, resulting in the using time of the battery being shortened greatly and user experience being decreased.

EP1643358 A1 discloses a device, such as a mobile phone or other handheld electronic device, having a hibernation mode in which the content of the working memory is cached to non-volatile memory when the device is powered down. Then, when the device is powered p the cached data can be retrieved and the device can be returned relatively quickly to its operational state.

EP0593272 A2 describes an electronic appliance control apparatus employing non-volatile random access memory for storing any of a command and data to be reained after a power of the power control apparatus is turned off.

US4093921A discloses a television tuning system having a non-volatile memory for storing digital tune words.

US2002152459A1 discloses an apparatus for recalling a previous program channel of interest from a current program channel.

### Content of the Invention

A technical problem to be solved by the present invention is to provide a mobile terminal and a method for dormancy of a MBBMS module in the mobile terminal so as to effectively utilize a battery and support longer standby using time.

In order to solve the above technical problem, the present invention provides a method for dormancy of a mobile broadcast business management system (MBBMS) module in a mobile terminal comprising:
before the MBBMS module enters into dormancy, extracting working state information and firmware information of the MBBMS module and storing the working state information and firmware information into a non-volatile memory in a form of file; and after the MBBMS module is awakened, reading the working state information and firmware information from the non-volatile memory, configuring the MBBMS module based on the working state information and firmware information and restoring working context of the MBBMS module.

Preferably, the method further comprises:
Pre-creating a state information backup table;
in the step of extracting the working state information and firmware information of the MBBMS module and storing the working state information and firmware information into the non-volatile memory in the form of file, storing the extracted working state information and firmware information into the state information backup table, and storing the state information backup table into the non-volatile memory of the mobile terminal in the form of file.

Preferably, the working state information contains mobile phone TV channel frequency point information and channel list information.

Preferably, the state information backup table further contains program channel frequency point information favored by a user and system timestamp created when the state information backup table is updated.

Preferably, the step of configuring the MBBMS module based on the working state information and firmware information and restoring the working context of the MBBMS module comprises: loading the mobile phone TV channel frequency point information, channel list information and firmware information into the MBBMS module.

In order to solve the above technical problem, the present invention further provides a mobile terminal for implementing dormancy of a mobile broadcast business management system (MBBMS) module comprising: an extracting module, a storage module and an initialization module, wherein
the extracting module is configured to, before the MBBMS module enters into dormancy, extract working state information and firmware information of the MBBMS module and store the working state information and firmware information into the storage module;
the storage module is a non-volatile memory and configured to store the working state information and firmware information in a form of file; and
the initialization module is configured to, after the MBBMS module is awakened, read the working state information and firmware information from the non-volatile memory, configure the MBBMS module based on the working state information and firmware information, and restore work context of the MBBMS module.

Preferably, the extracting module is configured to store the working state information and firmware information into a state information backup table, and store the state information backup table into the storage module in the form of file.

The working state information contains mobile phone TV channel frequency point information and channel list information.

Preferably, the state information backup table further contains program channel frequency point information favored by a user and system timestamp created when the state information backup table is updated.

Preferably, the initialization module is configured to, after the MBBMS module is awakened, read the working state information and firmware information from the non-volatile memory, and load the mobile phone TV channel frequency point information, channel list information and firmware information into the MBBMS module.

Preferably, the mobile terminal further comprises a determination module connected to the extracting module and the initialization module and configured to trigger the extracting module when determining that the MBBMS module enters into dormancy and trigger the initialization module when determining that the MBBMS module is awakened.

In the present invention, on the premise that the hardware framework of the existing MBBMS mobile phone hardware is not changed, only a software (backup state information backup table) method is required to achieve standby power saving function of the MBBMS terminal, thereby overcoming the defect in the related art that the MBBMS module has no dormancy function. The method in accordance with the present invention prolongs standby using time of the mobile phone while effectively improving user experience of the user using the MBBMS mobile phone TV services such that the mobile terminal can support standby and awaking of the MBBMS module without hardware dormancy function and use the battery more effectively, thereby decreasing power consumption of the battery and prolonging the standby using time of the mobile phone. The present invention is not only suitable for a MBBMS module which does not support the standby function but also applied to a MBBMS module which supports the standby function so as to save power better.

### Brief Description of Drawings

FIG. 1 is a flowchart of a dormancy process according to an embodiment of the present invention;
FIG. 2 is a flowchart of an awaking process according to an embodiment of the present invention;
FIG. 3 is a flowchart of a process for implementing a state information backup table according to an embodiment of the present invention; and
FIG. 4 is a block diagram of a mobile terminal according to an embodiment of the present invention.

### Preferred Embodiments of the Present Invention

In the present invention, backup and acquisition of information are combined into a method for dormancy of a MBBMS to improve user experience, and state information is stored into a non-volatile memory such that loss of related information can be avoided, even though a battery of a mobile phone is powered off or plugged out abnormally.

The inventive concept of the present invention is to extract working state information and firmware information of the MBBMS module before the MBBMS module enters into dormancy and store the working state information and firmware information into a non-volatile memory in a form of file, and read the working state information and firmware information from the non-volatile memory after the MBBMS module is awakened, configure the MBBMS module based on the working state information and firmware information and restore working context of the MBBMS module. Thus, the working state information of the MBBMS module prior to dormancy can be ensured not to be lost.

Restoring the working context means that mobile phone TV channel frequency point information, channel list information and firmware information are loaded into the MBBMS module.

A state information backup table is pre-created in a non-volatile memory of a mobile terminal for storing the working state information and firmware information.

Particularly, a state information backup table is pre-created in the mobile terminal; when the MBBMS module of the mobile terminal needs dormancy, the current working state information of the MBBMS module and the firmware information of the MBBMS module are stored in the state information backup table and the state information backup table is stored in the non-volatile memory (such as flash memory) of the mobile terminal, and the MBBMS module is switched off. When a user needs to use mobile phone TV services, the MBBMS module is powered on, the working state information and firmware information are read out from the state information backup table, and the MBBMS module is reconfigured based on the working state information and firmware information.

The working state information contains mainly mobile phone TV channel frequency point information and channel list information. The firmware information of the MBBMS module mainly refers to the firmware version of the MBBMS module, the size of which is about 64 KB.

The state information backup table may further contain program channel frequency point information favored by the user and system timestamp created when the state information backup table is updated.

The mobile terminal reconfiguring the MBBMS module based on the state information backup table comprises: reloading the firmware version of the MBBMS module and configuring the MBBMS module based on the mobile phone TV channel frequency point information and channel list information to restore the working state information stored prior to last dormancy.

The present invention will be described in detail below in conjunction with the accompanying drawings and particular implementation steps.

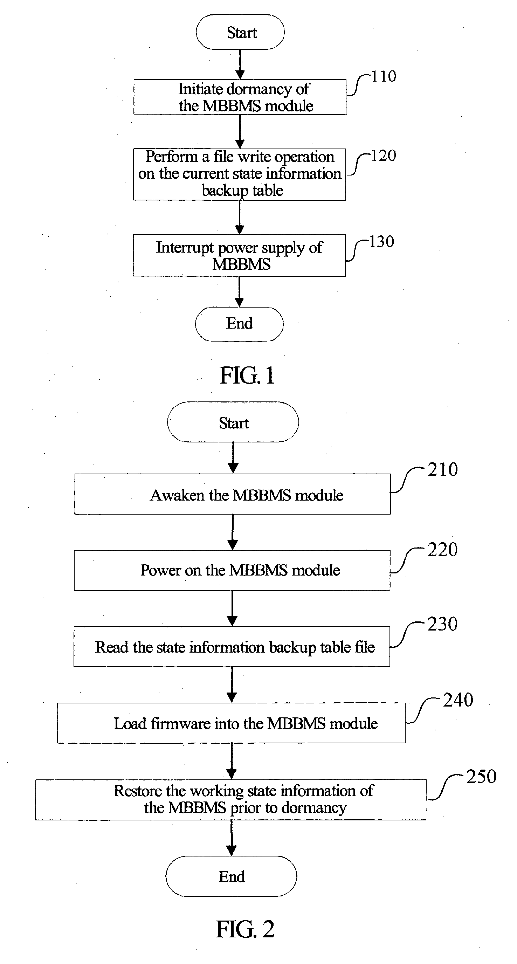

As shown in FIG. 1, a process where a MBBMS module enters into dormancy comprises the following steps.

In step 110, dormancy of the MBBMS module is initiated and a dormancy instruction is sent out.

The dormancy instruction, for example, may be an instruction of exiting a mobile phone TV play menu or an instruction for the mobile phone to enter into a standby mode.

In step 120, a control module of the mobile terminal is switched on or a state information backup table is created, a file write operation is performed on the current channel frequency point, play channel list, firmware information of the MBBMS module, and the state information backup table is stored into a state information backup table file.

In step 130, the control module of the mobile terminal processes power failure of the MBBMS module.

Power failure of the MBBMS module can be processed using an underlying drive interface.

As shown in FIG. 2, an awaking process of a MBBMS module comprises the following steps.

In step 210, an awaking instruction is initiated.

The awaking instruction, for example, may be an instruction sent by a user when viewing television programs using the MBBMS module.

In step 220, the MBBMS module is powered on by the control module of the mobile terminal.

In step 230, the control module of the mobile terminal performs a file read operation on working state information stored last time in the state information backup table file, and extracts the working state information and firmware information of the MBBMS module from the state information backup table.

In step 240, the MBBMS module is initialized using the firmware information, and firmware is obtained from the state information backup table file and loaded into the MBBMS module.

In step 250, the MBBMS module is initialized using the working state information, the MBBMS module is configured based on the stored working state information and the channel frequency point information and channel list information prior to dormancy are restored.

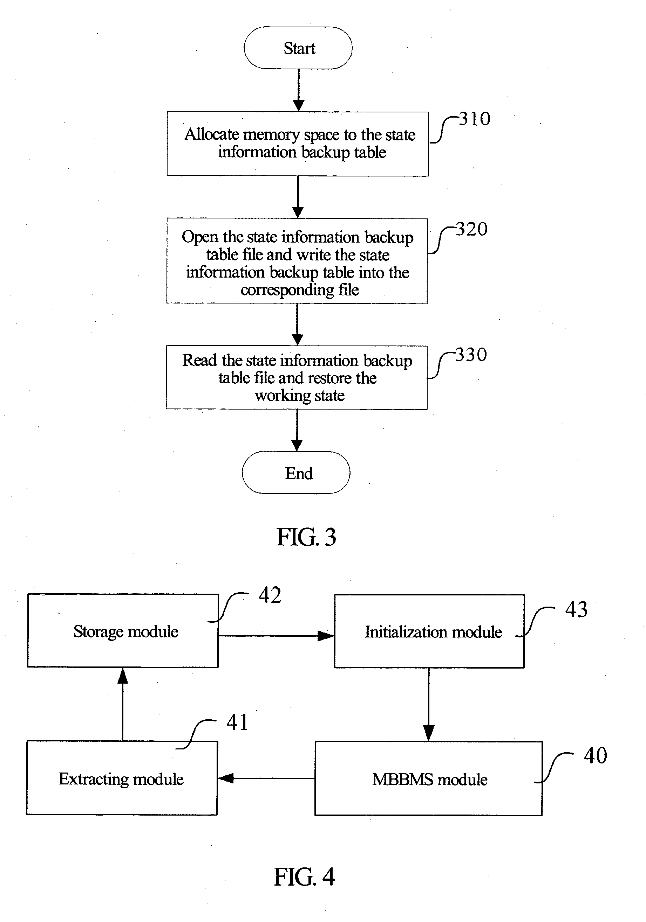

As shown in FIG. 3, the implementation of the state information backup table is as follows.

In step 310, corresponding space is allocated to the state information backup table required to be stored, such as firmware version, frequency point, current play program, etc.

The state information backup table is stored in the state information backup table file on the mobile terminal. When the MBBMS module needs dormancy, the state information backup table is used for storing the current working state information of the MBBMS module and the firmware information of the MBBMS module; and when MBBMS module needs to be awaken, the state information backup table is used for providing the working state information to the MBBMS module so as to restore it.

In step 320, when the user exits mobile phone TV services and the MBBMS module need to enter into dormancy, the state information backup table is opened (or created) to write the working state information and firmware information, and the working state information backup table is written into the state information backup table file.

The state information backup table refers to a memory space created in memory spaces, and the state information backup table file refers to a file created in a file system and is non-volatile.

In step 330, when the user starts the mobile phone TV services and the MBBMS module is required to be awakened, the control module opens the working state information backup table and takes out the working state information backup table from the working state information backup table file and restores the working state.

As shown in FIG. 4, a mobile terminal implementing dormancy of a MBBMS module 40 comprises an extracting module 41, a storage module 42 and an initialization module 43.

The extracting module is configured to, before the MBBMS module enters into dormancy, extract working state information and firmware information of the MBBMS module and store the working state information and firmware information into the storage module.

The storage module is a non-volatile memory and configured to store the working state information and firmware information in a form of file.

The initialization module is configured to, after the MBBMS module is awakened, read the working state information and firmware information from the storage module, configure the MBBMS module based on the working state information and firmware information, and restore their work context.

Preferably, the initialization module is configured to, after the MBBMS module is awakened, read the working state information and firmware information from the storage module, and load mobile phone TV channel frequency point information, channel list information and firmware information into the MBBMS module.

Preferably, the mobile terminal further comprises a determination module connected to the extracting module and the initialization module and configured to trigger the extracting module when determining that the MBBMS module enters into dormancy and trigger the initialization module when determining that the MBBMS module is awakened.

In the present invention, the approach of storing the working state information and firmware information of the MBBMS module prior dormancy can be used to implement standby power saving function of the MBBMS terminal, improving effectively user experience of the user using the MBBMS mobile phone TV services and prolonging standby using time of the mobile phone, such that the mobile terminal can support standby and awaking of the MBBMS module without hardware dormancy function and use the battery more effectively, thereby decreasing power consumption of the battery and prolonging the standby using time of the mobile phone.

It may be understood by those skilled in the art that all or some of the steps in the described method can be implemented by related hardware instructed by programs which may be stored in computer readable storage mediums, such as read-only memory, disk or CD-ROM, etc. Alternatively, all or some of the steps in the embodiments described above may also be implemented using one or more integrated circuits. Accordingly, each module/unit in the embodiments described above may be implemented in a form of hardware, or software functional module. The present invention is not limited to combinations of hardware and software in any particular form.

The present invention can be implemented by the method described above. Of course, other various embodiments may be possible. Various corresponding changes and variations to the present invention may be made by those skilled in the art without departing from the scope of the appended claims of the present invention.

### Industrial Applicability

In the mobile terminal and the method for dormancy of the MBBMS module in the mobile terminal in accordance with the present invention, the approach of storing the working state information and firmware information of the MBBMS module prior to dormancy can be used to implement the standby power saving function of the MBBMS terminal, improving effectively and user experience of the user using the MBBMS mobile phone TV services and prolonging standby using time of the mobile phone, such that the mobile terminal can support standby and awaking of the MBBMS module without hardware dormancy function and use the battery more effectively, thereby decreasing power consumption of the battery. In addition, the method described above is not only suitable for a MBBMS module which does not support the standby function but also applied to a MBBMS module which supports the standby function, and its applications are wide.

## Claims

1. A method for dormancy of a mobile broadcast business management system (MBBMS) module in a mobile terminal comprising:
before the MBBMS module enters into dormancy, extracting working state information and firmware information of the MBBMS module and storing the working state information and firmware information into a non-volatile memory in a form of file; and after the MBBMS module is awakened, reading the working state information and firmware information from the non-volatile memory, configuring the MBBMS module based on the working state information and firmware information and restoring working context of the MBBMS module;
wherein, the working state information contains mobile phone TV channel frequency point information and channel list information;
wherein the method further comprises:
pre-creating a state information backup table; and
in the step of extracting the working state information and firmware information of the MBBMS module and storing the working state information and firmware information into the non-volatile memory in the form of file, storing the extracted working state information and firmware information into the state information backup table, and storing the state information backup table into the non-volatile memory of the mobile terminal in the form of file.

2. The method according to claim 1, wherein
the state information backup table further contains program channel frequency point information favored by a user and system timestamp created when the state information backup table is updated.

3. The method according to claim 1, wherein
the step of configuring the MBBMS module based on the working state information and firmware information and restoring the working context of the MBBMS module comprises:
loading the mobile phone TV channel frequency point information, channel list information and firmware information into the MBBMS module.

4. A mobile terminal for implementing dormancy of a mobile broadcast business management system (MBBMS) module comprising: an extracting module, a storage module and an initialization module, wherein
the extracting module is configured to, before the MBBMS module enters into dormancy, extract working state information and firmware information of the MBBMS module and store the working state information and firmware information into the storage module;
the storage module is a non-volatile memory and configured to store the working state information and firmware information in a form of file, wherein, the working state information contains mobile phone TV channel frequency point information and channel list information; and
the initialization module is configured to, after the MBBMS module is awakened, read the working state information and firmware information from the non-volatile memory, configure the MBBMS module based on the working state information and firmware information, and restore work context of the MBBMS module;
wherein the extracting module is configured to store the working state information and firmware information into a state information backup table, and store the state information backup table into the storage module in the form of file.

5. The mobile terminal according to claim 4, wherein
the state information backup table further contains program channel frequency point information favored by a user and system timestamp created when the state information backup table is updated.

6. The mobile terminal according to claim 4, wherein
the initialization module is configured to, after the MBBMS module is awakened, read the working state information and firmware information from the non-volatile memory, and load the mobile phone TV channel frequency point information, channel list information and firmware information into the MBBMS module.

7. The mobile terminal according to claim 4, wherein the mobile terminal further comprises a determination module connected to the extracting module and the initialization module and configured to trigger the extracting module when determining that the MBBMS module enters into dormancy and trigger the initialization module when determining that the MBBMS module is awakened.

## Patentansprüche

1. Ruhezustandsverfahren für ein Mobile-Broadcast-Business-Management-System, MBBMS,-Modul in einem mobilen Endgerät, aufweisend:
bevor das MBBMS-Modul in einen Ruhezustand übergeht, Extrahieren von Betriebszustandsinformationen und Firmware-Informationen des MBBMS-Moduls und Speichern der Betriebszustandsinformationen und der Firmware-Informationen in einem nichtflüchtigen Speicher in einer Dateiform; und
nachdem das MBBMS-Modul erwacht ist, Auslesen der Betriebszustandsinformationen und der Firmware-Informationen aus dem nichtflüchtigen Speicher, Konfigurieren des MBBMS-Moduls auf Basis der Betriebszustandsinformationen und der Firmware-Informationen und Wiederherstellen eines Betriebskontexts des MBBMS-Moduls;
wobei die Betriebszustandsinformationen Mobiltelefon-TV-Kanal-Frequenzpunktinformationen und Kanallisteninformationen enthalten;
wobei das Verfahren des Weiteren aufweist:
Vorab-Erstellen einer Zustandsinformations-Sicherungstabelle; und
in dem Schritt des Extrahierens der Betriebszustandsinformationen und der Firmware-Informationen des MBBMS-Moduls und des Speicherns der Betriebszustandsinformationen und der Firmware-Informationen in einem nichtflüchtigen Speicher in einer Dateiform, Speichern der extrahierten Betriebszustandsinformationen und der Firmware-Informationen in der Zustandsinformations-Sicherungstabelle, und Speichern der Zustandsinformations-Sicherungstabelle in dem nichtflüchtigen Speicher des mobilen Endgeräts in Dateiform.

2. Verfahren gemäß Anspruch 1, wobei die Zustandsinformations-Sicherungstabelle des Weiteren Frequenzpunkt-Informationen für einen von einem Benutzer bevorzugten Programmkanal sowie eine Systemzeitmarke enthält, die erzeugt wird, wenn die Zustandsinformations-Sicherungstabelle aktualisiert wird.

3. Verfahren gemäß Anspruch 1, wobei der Schritt des Konfigurierens des MBBMS-Moduls auf Basis der Betriebszustandsinformationen und der Firmware-Informationen und des Wiederherstellens des Betriebskontexts des MBBMS-Moduls aufweist:
Laden der Mobiltelefon-TV-Kanal-Frequenzpunktinformationen, der Kanallisteninformationen und der Firmware-Informationen in das MBBMS-Modul.

4. Mobiles Endgerät zum Implementieren eines Ruhezustands für ein Mobile-Broadcast-Business-Management-System, MBBMS,-Modul, aufweisend:
ein Extraktionsmodul,
ein Speichermodul und
ein Initialisierungsmodul, wobei
das Extraktionsmodul konfiguriert ist, bevor das MBBMS-Modul in den Ruhezustand übergeht Betriebszustandsinformationen und Firmware-Informationen des MBBMS-Moduls zu extrahieren und die Betriebszustandsinformationen und die Firmware-Informationen in dem Speichermodul zu speichern;
das Speichermodul ein nicht-flüchtiger Speicher ist und konfiguriert ist, die Betriebszustandsinformationen und die Firmware-Informationen in einer Dateiform zu speichern, wobei die Betriebszustandsinformationen Mobiltelefon-TV-Kanal-Frequenzpunktinformationen und Kanallisteninformationen enthalten; und
das Initialisierungsmodul konfiguriert ist, nachdem das MBBMS-Modul erwacht ist die Betriebszustandsinformationen und die Firmware-Informationen aus dem nichtflüchtigen Speicher auszulesen, das MBBMS-Modul auf Basis der Betriebszustandsinformationen und der Firmware-Informationen zu konfigurieren und einen Betriebskontext des MBBMS-Moduls wiederherzustellen;
wobei das Extraktionsmodul konfiguriert ist, die Betriebszustandsinformationen und die Firmware-Informationen in einer Zustandsinformations-Sicherungstabelle zu speichern und die Zustandsinformations-Sicherungstabelle in dem Speichermodul in Dateiform zu speichern.

5. Mobiles Endgerät gemäß Anspruch 4, wobei die Zustandsinformations-Sicherungstabelle des Weiteren Frequenzpunkt-Informationen für einen von einem Benutzer bevorzugten Programmkanal sowie eine Systemzeitmarke enthält, die erzeugt wird, wenn die Zustandsinformations-Sicherungstabelle aktualisiert wird.

6. Mobiles Endgerät gemäß Anspruch 4, wobei das Initialisierungsmodul konfiguriert ist, nachdem das MBBMS-Modul erwacht ist die Betriebszustandsinformationen und die Firmware-Informationen aus dem nichtflüchtign Speicher auszulesen, und die Mobiltelefon-TV-Kanal-Frequenzpunktinformationen, die Kanallisteninformationen und die Firmware-Informationen in das MBBMS-Modul zu laden.

7. Mobiles Endgerät gemäß Anspruch 4, wobei das mobile Endgerät des Weiteren ein Feststellungsmodul aufweist, das mit dem Extraktionsmodul und dem Initialisierungsmodul verbunden ist, und das konfiguriert ist, das Extraktionsmodul zu triggern, wenn es feststellt, dass das MBBMS-Modul in den Ruhezustand übergeht, und das Initialisierungsmodul zu triggern, wenn es feststellt, dass das MBBMS-Modul erwacht ist.

## Revendications

1. Procédé de repos pour un module de système de gestion commerciale de diffusion mobile (MBBMS) dans un terminal mobile comprenant :
avant que le module MBBMS ne soit au repos, extraction des informations d'état de travail et des informations de micro-logiciel du module MBBMS, et stockage des informations d'état de travail et des informations de micro-logiciel selon une forme de fichier dans une mémoire non volatile; et après le réveil du module MBBMS, lecture des informations d'état de travail et des informations de micro-logiciel à partir de la mémoire non volatile, configuration du module MBBMS selon les informations d'état de travail et les informations de micro-logiciel, et reprise du contexte de travail du module MBBMS ;
dans lequel les informations d'état de travail contiennent des informations de point de fréquence de canal de TV de téléphone mobile et des informations de liste de canaux ;
dans lequel le procédé comprend en outre :
la création préalable d'un tableau de sauvegarde des informations d'état ; et
au cours de l'étape d'extraction des informations d'état de travail et des informations de micro-logiciel du module MBBMS et de le stockage des informations d'état de travail et des informations de micro-logiciel selon une forme de fichier dans la mémoire non volatile, stockage des informations d'état de travail et des informations de micro-logiciel extraites dans le tableau de sauvegarde des informations d'état, et stockage du tableau de sauvegarde des informations d'état selon une forme de fichier dans la mémoire non volatile du terminal mobile.

2. Procédé selon la revendication 1, dans lequel
le tableau de sauvegarde des informations d'état contient en outre des informations de point de fréquence de canal de programme choisi comme favori par un utilisateur et un horodatage du système créé quand le tableau de sauvegarde des informations d'état est mis à jour.

3. Procédé selon la revendication 1, dans lequel
l'étape de configuration du module MBBMS selon les informations d'état de travail et les informations de micro-logiciel et de reprise du contexte de travail du module MBBMS comprend :
le chargement des informations de point de fréquence de canal de TV de téléphone mobile, des informations de liste de canaux et des informations de micro-logiciel dans le module MBBMS.

4. Terminal mobile permettant la mise au repos d'un module de système de gestion commerciale de diffusion mobile (MBBMS) comprenant : un module d'extraction, un module de stockage et un module d'initialisation, dans lequel
le module d'extraction est configuré pour extraire, avant que le module MBBMS ne soit au repos, des informations d'état de travail et des informations de micro-logiciel du module MBBMS, et pour stocker les informations d'état de travail et les informations de micro-logiciel dans le module de stockage ;
le module de stockage est une mémoire non volatile et est configuré pour stocker les informations d'état de travail et les informations de micro-logiciel selon une forme de fichier, dans lequel les informations d'état de travail contiennent des informations de point de fréquence de canal de TV de téléphone mobile et des informations de liste de canaux ; et
le module d'initialisation est configuré pour lire, lors du réveil du module MBBMS, les informations d'état de travail et les informations de micro-logiciel à partir de la mémoire non volatile, pour configurer le module MBBMS selon les informations d'état de travail et les informations de micro-logiciel, et pour reprendre le contexte de travail du module MBBMS ;
dans lequel le module d'extraction est configuré pour stocker les informations d'état de travail et les informations de micro-logiciel dans un tableau de sauvegarde des informations d'état et pour stocker le tableau de sauvegarde des informations d'état selon la forme de fichier dans le module de stockage.

5. Terminal mobile selon la revendication 4, dans lequel
le tableau de sauvegarde des informations d'état contient en outre des informations de point de fréquence de canal de programme choisi comme favori par un utilisateur et un horodatage du système créé lorsque le tableau de sauvegarde des informations d'état est mis à jour.

6. Terminal mobile selon la revendication 4, dans lequel
le module d'initialisation est configuré pour lire, après le réveil du module MBBMS, les informations d'état de travail et les informations de micro-logiciel dans la mémoire non volatile et pour charger les informations de point de fréquence de canal de TV de téléphone mobile, les informations de liste de canaux et les informations de micro-logiciel dans le module MBBMS.

7. Terminal mobile selon la revendication 4, dans lequel le terminal mobile comprend en outre un module de détermination connecté au module d'extraction et au module d'initialisation et configuré pour déclencher le module d'extraction au moment de la détermination que le module MBBMS se met en repos et pour déclencher le module d'initialisation au moment de la détermination que le module MBBMS est en éveil.
